# EUROPÄISCHE PATENTANMELDUNG

(11) **EP 1 671 744 A2**
(43) Veröffentlichungstag der Anmeldung: **21.06.2006**
(21) Anmeldenummer: 05025337.6
(22) Anmeldetag: 21.11.2005
(51) Int. Cl.: B23Q 3/157, B23Q 3/155

(54) **Werkzeugwechselvorrichtung mit einem zwei Werkzeuggreifer aufweisenden drehbaren Werkzeugwechselarm**

(30) Priorität: 18.12.2004 DE 102004061060
(71) Anmelder: Bosch Rexroth AG, 70184 Stuttgart (DE)
(72) Erfinder: Schnurr, Bernd, 97816 Lohr am Main (DE); Zöcklein, Klaus, 63869 Heigenbrücken (DE)

(57) **Zusammenfassung**

Werkzeugwechselsystem 1 mit Werkzeugspindel 2, Werkzeugvorratsträger 3 und länglich ausgebildetem Werkzeugwechselarm 4 mit Werkzeuggreifer 6 mit optimierter Werkzeugwechselzeit, wobei eine möglichst geringe Platzbeanspruchung durch das Werkzeugwechselsystem 1 gefordert ist und der Werkzeugwechselarm 4 an einem Ende drehbar gelagert ist und das andere Ende zwei Werkzeuggreifer 6 umfasst.

## Beschreibung

Die Erfindung entspringt dem Gebiet der Werkzeugmaschinen und befasst sich mit einer Vorrichtung bzw. einem Verfahren zum Auswechseln von Werkzeugen mittels eines Werkzeugwechselsystems bzw. eines Werkzeugwechselverfahrens gemäß den unabhängigen Ansprüchen.

Im Stand der Technik sind zahlreiche Methoden bekannt, wie eine Werkzeugmaschine mehr oder weniger selbsttätig Werkzeuge auswechseln kann. Beispielsweise zeigt die Schrift DE 101 63 294 A1 ein Werkzeugwechselsystem für eine programmgesteuerte Fräs- und Bohrmaschine mit einem seitlich neben dem Maschinenständer angeordneten Werkzeugmagazin und einem seitlich neben dem Arbeitsraum angeordneten Werkzeugwechsler, der einen verdrehbaren und in einer Achse verschiebbaren Greifer mit gegeneinander winkelversetzten Greiferzangen trägt, von denen jeweils eine Greiferzange zur Aufnahme des gebrauchten Werkzeuges aus der Arbeitsspindel und jeweils eine zweite Greiferzange zum Einwechseln eines neuen Werkzeuges in die Arbeitsspindel vorgesehen ist.

Derartig ausgebildete Werkzeugwechsler erfordern einen großen Bewegungsspielraum und damit entsprechend viel Platz, was letztlich auch zu einer voluminöseren Werkzeugmaschine beiträgt. Auch die Werkzeugwechselzeit ist nicht optimal.

Es ist die Aufgabe der Erfindung die Werkzeugwechselzeit an Werkzeugmaschinen zu verkürzen bzw. zumindest eine Beschleunigung des Werkzeugwechselvorganges herbeizufiihren, wobei eine möglichst geringe Platzbeanspruchung durch das Werkzeugwechselsystem wünschenswert ist.

Diese Aufgabe wird erfindungsgemäß dadurch gelöst, dass ein Werkzeugwechselsystem der Eingangs genannten Art einen Werkzeugwechselarm umfasst, welcher an einem Ende drehbar gelagert ist und dessen anderes Ende zwei Werkzeuggreifer umfasst. Ziel dabei ist es, dass die Greifer möglichst nahe beieinander liegen.

Der erste Werkzeuggreifer fasst dabei ein aus einem Werkzeugmagazin vor dem eigentlichen Wechselvorgang entnommenes Werkzeug, während der zweite Werkzeuggreifer das auszuwechselnde Werkzeug von der Werkzeugspindel fassen kann, so dass während der Werkzeugwechselzeit kurzfristig beide Greifer je ein Werkzeug halten. Aufgrund der geringen räumlichen Beabstandung der beiden Greifer bzw. Werkzeuge und der hieraus resultierenden Tatsache, dass sich das neue Werkzeug bei der Entnahme des alten Werkzeuges schon in unmittelbarer Nähe der Werkzeugspindel befindet, kann ein zeitlich sehr schneller Wechselvorgang erfolgen. Es ist nur eine kleine Bewegung des Werkzeugwechselarmes zwischen der Phase der Entnahme eines Werkzeuges von der Werkzeugspindel und der Phase des Einsetzens eines neuen Werkzeuges auf die Werkzeugspindel erforderlich. Mittels einer außermittigen drehbaren Lagerung des Werkzeugwechselarmes wird außerdem eine Einsparung von Bewegungsspielraum erreicht, so dass das Werkzeugwechselsystem insgesamt kompakter realisiert werden kann.

Alles in allem erreicht man mittels des oben beschriebenen Werkzeugwechselsystems einen beschleunigten Werkzeugwechsel bei geringem Platzbedarf, womit die Aufgabe der Erfindung gelöst ist.

Vorzugsweise umfasst der Werkzeugwechselarm eine Bewegungsführung, so dass er einer vorbestimmten Bewegungsbahn in einer zu seiner Drehachse im wesentlichen senkrechten Ebene folgen kann. Dies vereinfacht das Ausfahren des Werkzeuges aus dem Werkzeugmagazin bzw. der Werkzeugspindel sowie das Einfahren des Werkzeuges auf die Werkzeugspindel bzw. in das Werkzeugmagazin. Der Werkzeuggreifer umfasst hierzu zunächst das Werkzeug, bevor er seine Position anschließend mittels einer linearen und/oder kurvenförmigen Fahrbewegung verändert und das Werkzeug mitführt.

Vorteilhafterweise ist der Werkzeugwechselarm auch in Richtung seiner Drehachse linear beweglich gelagert, so dass er eine Hub- oder Absenkbewegung ausführen kann. Hierdurch ergeben sich weitere Freiheitsgrade beim Wechsel eines Werkzeuges, so dass beispielsweise ein Werkzeug mittels einer Anhebe- und/oder Absenkbewegung des Werkzeugwechselarmes ausgewechselt werden könnte.

Besonders vorteilhaft ist der Werkzeugwechselarm als drehbarer Balken ausgebildet, wobei die Drehachse an der dem Werkzeuggreifer im wesentlichen gegenüberliegenden Ende des Werkzeugwechselarmes angeordnet ist. Die erfindungsgemäße einseitige Lagerung der Drehachse mit Anbringung von Greifern an der gegenüberliegenden Seite lässt sich bei einer derartigen Ausführungsform besonders leicht realisieren.

Ganz besonders bevorzugt weist der Werkzeuggreifer zwei je an einer Längsseite des Werkzeugwechselarmes angeordnete und sich gegenüberliegende Ausnehmungen auf. Somit kann mit einer Drehung ein erstes Werkzeug und mit einer weiteren, entgegengesetzten Drehung ein zweites Werkzeug erfasst werden.

Vorteilhaft ist es, wenn der Werkzeugwechselarm elektrisch direkt angetrieben ist. Direkt angetrieben bedeutet, dass zwischen Antrieb und Werkzeugwechselarm eine steife Kopplung existiert, ohne Getriebe oder sonstige verschleißbehaftete Kuppelvorrichtungen. Dies erhöht die Lebensdauer erheblich. Da der Bewegungsablauf des Werkzeugwechselarmes eine Drehbewegung und eine Linearbewegung umfassen kann, spricht man auch von einer Linear- und Dreheinheit. So könnte beispielsweise ein Elektromotor als Antrieb für die Linearbewegung und ein weiterer Elektromotor als Antrieb für die Drehbewegung fungieren.

Die Vorteile der Erfindung kommen dann ganz besonders zum Tragen, wenn das Werkzeugwechselsystem von einer Werkzeugmaschine umfasst ist und diese im wesentlichen von der kleinen Bauform und den optimierten Bewegungsabläufen profitiert.

Eine zusätzliche zeitmäßige Optimierung des Werkzeugwechsels kann mittels des erfindungsgemäßen Verfahrens zum Wechseln von Werkzeugen an einer in einem Arbeitsraum angeordneten Werkzeugspindel mittels eines Werkzeugwechselarmes und eines Werkzeugmagazins an einer Wechselposition realisiert werden, wobei der Werkzeugwechselarm folgende Phasen durchläuft:
a) Verlassen einer Parkstellung,
b) Werkzeugwechsel vorbereiten,
c) Werkzeugwechsel durchführen,
d) Parkstellung erneut einnehmen,
und Bewegungsabläufe des Werkzeugwechselarmes und der Werkzeugspindel zeitparallel ablaufen, wobei sich die Werkzeugspindel zur Vorbereitung des Werkzeugwechsels im wesentlichen gleichzeitig mit dem Werkzeugwechselarm zur Wechselposition bewegt und sich die Werkzeugspindel nach Durchführung des Werkzeugwechsels im wesentlichen zeitgleich in den Arbeitsraum bewegt, während sich der Werkzeugwechselarm von der Wechselposition entfernt.

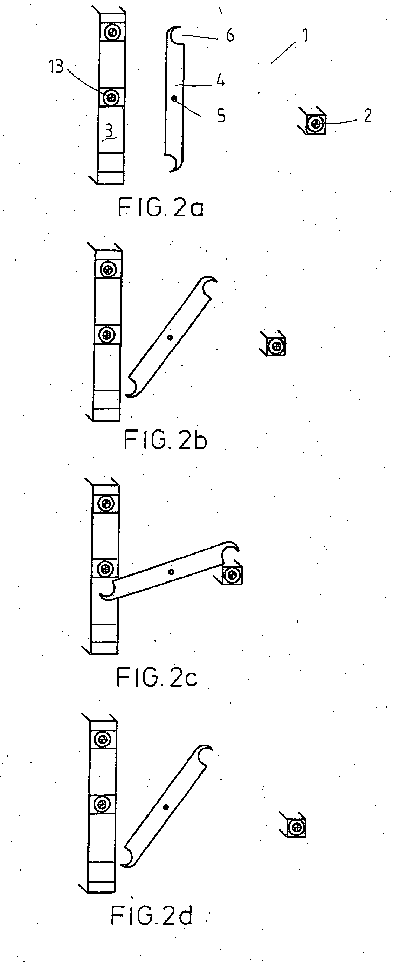

Das Verfahren bewirkt eine effektive Ausnutzung der zur Verfügung stehenden Prozesszeit für einen Werkzeugwechsel, indem zeitparallele Bewegungsabläufe stattfinden und somit Wartezeiten vermieden werden. D.h. einzelne Phasen laufen hier nicht nacheinander ab, sondern zeitgleich. Dies verkürzt den Wechselvorgang erheblich und trägt zusätzlich zur Lösung der Aufgabe der Erfindung bei. Dieses Verfahren lässt sich sowohl für Werkzeugwechselsysteme gemäß einem der Ansprüche 1 bis 7, also für einarmige Lösungen mit drehbarer Lagerung außerhalb des Schwerpunktes, als auch für sogenannte Doppelgreifer (zweiarmige Lösungen) verwenden. Diese Doppelgreifer sind als längliche Balken ausgebildet und weisen an jedem Ende eine Ausnehmung zur Aufnahme von Werkzeugen auf. Die Ausnehmungen sind an den entgegengesetzten und sich gegenüberliegenden Längsseiten angebracht und die Lagerung bzw. die Drehachse des Werkzeugwechselarmes ist in Balkenmitte vorgesehen (siehe auch Figur 2a bis 2d mit Beschreibung).

Vorteilhafterweise sind von dem Verfahren zusätzlich noch folgende Teilschritte umfasst:
a) Entnehmen des Werkzeuges aus dem Werkzeugmagazin bzw. der Werkzeugspindel mittels einer Bewegung des Werkzeugwechselarmes entlang einer vorgegebenen Bewegungsbahn.
b) Einsetzen des einzuwechselnden Werkzeuges an der Werkzeugspindel bzw. Ablegen des ausgewechselten Werkzeuges im Werkzeugmagazin mittels einer Bewegung des Werkzeugwechselarmes entlang einer vorgegebenen Bewegungsbahn.

Entnehmen bedeutet hier das Herausnehmen bzw. Ausfahren des Werkzeuges zum Beispiel mittels einer Hubbewegung oder einer Bewegung entlang einer vorgegebenen Bewegungsbahn. Einsetzen bedeutet das Einfahren bzw. Einsetzen des Werkzeuges ebenfalls mittels Hubbewegungen oder alternativer Bewegungsabläufe. Die Hubbewegung wird in der Regel eine vertikale Positionsänderung des Werkzeugwechselarmes zur Folge haben. Es sind aber auch Bewegungsabläufe zum Auswechseln des Werkzeuges denkbar, welche ohne vertikale Bewegungen auskommen.

Somit kann das Werkzeug unter Ausnutzung einer zur Drehachse des Werkzeugwechselarmes im wesentlichen senkrechten Bewegungsachse bewegt werden, ohne dass eine Hubbewegung erforderlich ist. Außerdem bietet sich dadurch eine Möglichkeit das Werkzeug schnell aus dem Bereich des Werkzeugmagazins bzw. der Werkzeugspindel bzw. der Werkzeugwechselposition zu entfernen, so dass bereits der nächste Werkzeugwechsel vorbereitet werden kann.

Besonders vorteilhaft wird das Verfahren mit einem Werkzeugwechselsystem nach einem der Ansprüche 1 bis 7 kombiniert. Die geringen Abmessungen des Werkzeugwechselsystems in Verbindung mit seinen optimierten Bewegungsabläufen und der verfahrensgemäßen Geschwindigkeitsoptimierung liefern mittels dieser Kombination den effektivsten Lösungsansatz zur Lösung der erfindungsgemäßen Aufgabe. Ganz besonders vorteilhaft zeigt sich diese Kombination noch bei Verwendung eines zusätzlichen Verfahrensschrittes, indem zwischen Entnahme des Werkzeuges aus dem Werkzeugmagazin und Einsetzen des einzuwechselnden Werkzeuges an der Werkzeugspindel vorübergehend die Parkstellung eingenommen wird. In dieser Parkstellung können periphere Maßnahmen für den Werkzeugwechsel durchgeführt werden. Beispielsweise könnte das Verlassen des Arbeitsraumes durch die Spindel vorbereitet werden.

Im Folgenden wird mittels Figurenbeschreibungen unter anderem der Stand der Technik der erfindungsgemäßen Vorrichtung bzw. dem erfindungsgemäßen Verfahren gegenübergestellt. Die Zeichnungen zeigen schematisch die wesentlichen Bestandteile eines Werkzeugwechselsystems mit Werkzeugvorratsträger bzw. Werkzeugmagazin bzw. Werkzeugtasche, Werkzeugwechselarm und Werkzeuggreifer. Bewegungsabläufe des Werkzeugwechselsystems sind in der Draufsicht gezeichnet. Es zeigen im Detail:
- Fig. 1a bis g:: Doppelgreifer mit Werkzeugwechselverfahren nach dem Stand der Technik.
- Fig. 2a bis d:: Doppelgreifer mit optimiertem Werkzeugwechselverfahren.
- Fig. 3a bis n:: Einseitiger Doppelgreifer mit optimiertem Werkzeugwechselverfahren.
- Fig. 4:: Bewegungsablauf eines Greifers gemäß Figur 1 im Zeitdiagramm.
- Fig. 5:: Bewegungsablauf eines Greifers gemäß Figur 2 im Zeitdiagramm.
- Fig. 6:: Bewegungsablauf eines Greifers gemäß Figur 3 im Zeitdiagramm.

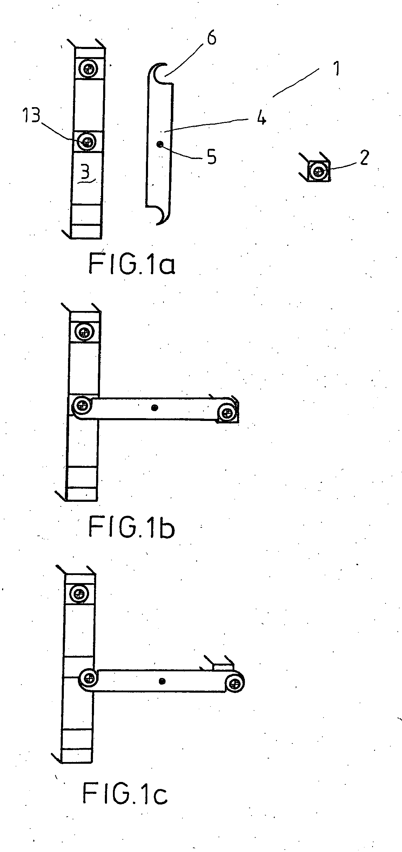

Figur 1a zeigt eine Werkzeugspindel 2, welche im Arbeitsraum momentan einen Arbeitsgang ausführt. Der Werkzeugwechselarm 4 befindet sich in einer Grund- oder Parkstellung und das Werkzeugmagazin 3 liefert ein neues, vorgewähltes Werkzeug 13 an. Die in Figur 1a gezeigten Bezugszeichen gelten auch für die identischen in Figur 1b bis 1g gezeigten Komponenten.

Figur 1b zeigt eine veränderte Werkzeugspindelposition und eine veränderte Werkzeugwechselarmposition. Der Werkzeugwechselarm 4 hat hier eine Drehung um 90° im Uhrzeigersinn vollzogen und greift mit einem ersten Greifer 6 ein neues Werkzeug 13 im Werkzeugmagazin 3 und mit einem zweiten gegenüberliegenden Greifer 6 das Werkzeug 13 an der Werkzeugspindel 2. Die Werkzeugspindel 2 befindet sich jetzt, wie bereits schon oben angedeutet, in der sogenannten Werkzeugwechselposition. Die Werkzeuge 13 rasten in den Werkzeughalterungen bzw. in den Greifern 6 annähernd gleichzeitig ein.

Figur 1c zeigt den Werkzeugwechselarm 4 beim Ausführen eines Längshubes (hier nach rechts), welcher eine von oben betrachtet waagrechte und senkrechte Bewegungskomponente umfasst, wobei er die Werkzeuge 13 im wesentlichen gleichzeitig aus dem Werkzeugmagazin 3 und aus der Werkzeugspindel 2 herauszieht.

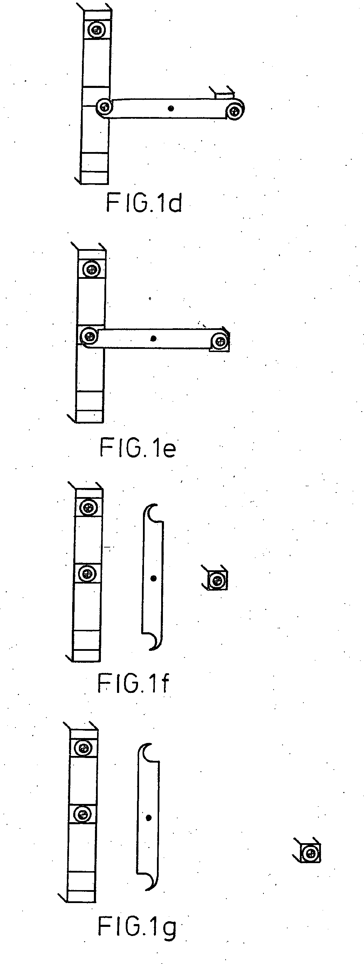

In Figur 1d hat der Werkzeugwechselarm 4 eine 180° - Drehung im Uhrzeigersinn vollzogen und somit die Werkzeuge 13 ausgetauscht.

Figur 1e zeigt den Werkzeugwechselarm 4 beim Einsetzen der Werkzeuge 13 in das Werkzeugmagazin 3 bzw. die Werkzeugspindel 2 durch einen Längshub, erneut mit waagrechter und senkrechter Bewegungskomponente.

Nachdem der Werkzeugwechselarm 4 eine weitere 90°-Drehung, diesmal allerdings gegen den Uhrzeigersinn vollzogen hat, befindet er sich wieder in der Grund- bzw. Parkstellung, wobei sich die Werkzeugspindel 2 immer noch an der Wechselposition befindet. Dies zeigt Figur 1f.

Anschließend fährt die Werkzeugspindel 2, wie in Figur 1g gezeigt, wieder in den Arbeitsraum zurück, um mit dem neuen Werkzeug das Werkstück 13 zu bearbeiten.

Der Nachteil dieser Vorgehensweise sind die relativ langen Zeitintervalle, in denen entweder die Werkzeugspindel 2 oder der Werkzeugwechselarm 4 in einer Position verharrt, und zwar so lange, bis der nächste Verfahrensschritt ausgeführt werden kann. Dies geschieht beispielsweise beim Übergang der Werkzeugspindel 2 vom Arbeitsraum zur Wechselposition und umgekehrt. Hier wartet der Werkzeugwechselarm 4 bis die Werkzeugspindel 2 ihre gewünschte Stellung erreicht hat untätig in seiner Grundstellung, wodurch wertvolle Zeit verloren geht. Außerdem benötigt der Werkzeugwechselarm 4 aufgrund seiner propellerartigen Funktionsweise bzw. Bauform relativ viel Bewegungsspielraum, so dass immer ein recht großer Mindestabstand zwischen Werkzeugmagazin 3 und Werkzeugspindel 2 einzuhalten ist.

Die erfindungsgemäße Realisierung gemäß Figur 2a bis 2d erfordert zwar den gleichen Stauraum wie die Ausführungsform nach Figur 1a bis 1 g, der Bewegungsablauf ist allerdings verfahrensmäßig optimiert, was den Werkzeugwechsel erheblich beschleunigt.

Die in der Figur 2a gezeigte Ausgarigssituation ist identisch mit der der Figur 1a. Die in Figur 2a gezeigten Bezugszeichen gelten auch für die identischen in Figur 2b bis 2d gezeigten Komponenten. Der Werkzeugwechselarm 4 befindet sich in seiner Grundstellung und die Werkzeugspindel 2 in ihrer Arbeitsstellung. Der Unterschied zum vorherigen, bekannten, Beispiel zeigt sich dann, wenn Werkzeugwechselarm 4 und Werkzeugspindel 2 die Werkzeugwechselposition anfahren (Figur 2b). Der Werkzeugwechselarm 4 dreht sich bis kurz vor die Werkzeugwechselposition im Uhrzeigersinn, während sich die Werkzeugspindel 2 ebenfalls zur Werkzeugwechselposition bewegt (Vorbereitungsphase, Figur 2c). Diese beiden Vorgänge laufen im Gegensatz zur vorherigen Lösung gleichzeitig ab, so dass weder die Werkzeugspindel 2, noch der Werkzeugwechselarm 4 in einer Warteposition verharrt und wertvolle Prozesszeit vergeudet. Erst nachdem die Werkzeugspindel 2 die Werkzeugwechselposition erreicht hat, dreht sich der Werkzeugwechselarm 4 noch geringfügig weiter, so dass er die 90°-Drehung vollenden und das Werkzeug 13 an der Werkzeugspindel 2 greifen kann. Nachdem der Werkzeugwechsel nach einer 180°-Drehung im Uhrzeigersinn wie im zuvor genannten Anwendungsfall (siehe Figur 1b bis 1e mit Beschreibung) erfolgt ist, dreht sich der Arm mittels einer 90°-Drehung gegen den Uhrzeigersinn wieder in seine Parkstellung zurück (Fig. 2d). Dies erfolgt gleichzeitig mit der Bewegung der Werkzeugspindel von der Werkzeugwechselposition in die Werkstückbearbeitungsposition (Nachbereitungsphase). Die Erfindung nutzt hier also durch im wesentlichen zeitgleiche Bewegungsabläufe bei der Vorbereitung bzw. Nachbereitung eines Werkzeugwechsels die Prozesszeit besser aus und verringert damit die erforderliche Prozesszeit für einen Werkzeugwechselvorgang.

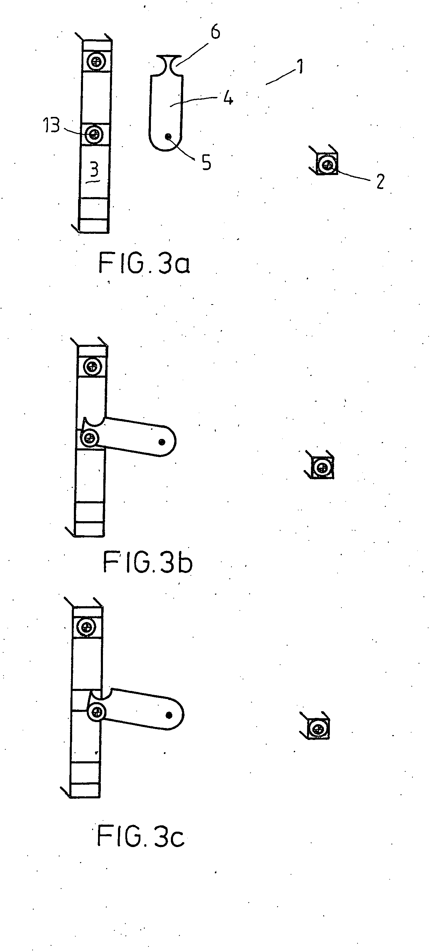

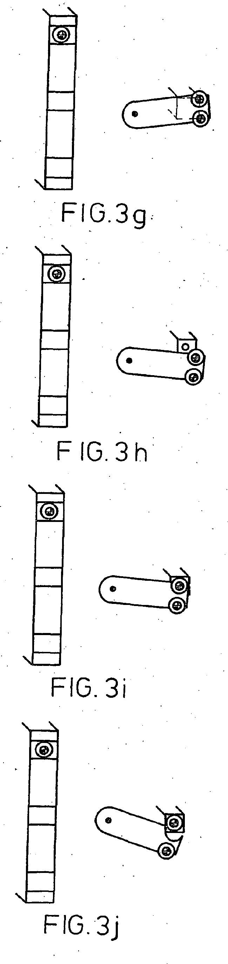

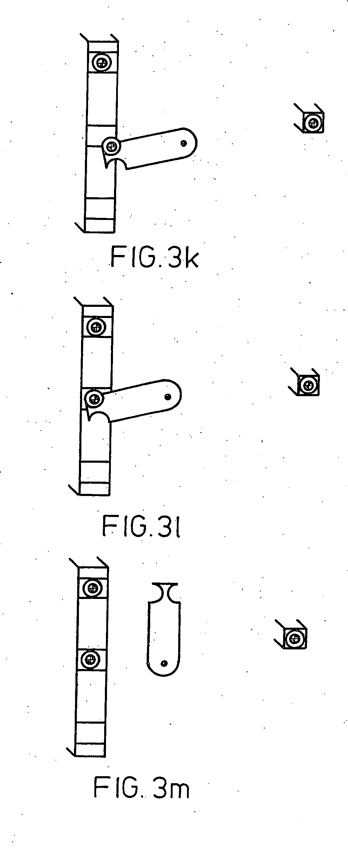

Die Figuren 3a bis 3n zeigen eine mechanische Ausgestaltungsform der Erfindung nach einem der Ansprüche 1 bis 7, der wegen des optimierten Bewegungsablaufes nach dem erfindungsgemäßen Verfahren gegenüber der in Figur 2a bis 2d beschriebenen mechanischen Ausführungsform der Vorzug gewährt werden sollte. Die in Figur 3a gezeigten Bezugszeichen gelten auch für die identischen in Figur 3b bis 3j gezeigten Komponenten.

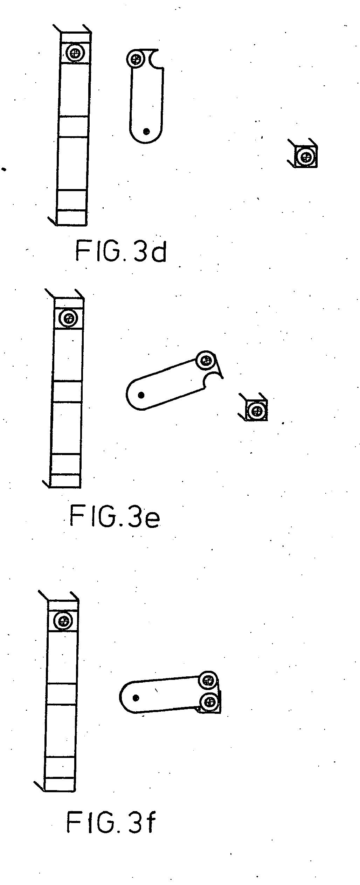

Der Werkzeugwechselarm 4 ist hier als Einarmgreifer 4 realisiert, welcher an einem Ende drehbar 5 gelagert ist und am anderen Ende zwei Werkzeuggreifer 6 umfasst. In Figur 3a befindet sich der Werkzeugwechselarm 4 gerade in seiner Grundstellung, während die Werkzeugspindel 2 ein Werkzeug im Arbeitsraum bearbeitet und das Werkzeugmagazin 3 ein neues Werkzeug 13 bereit hält. Zunächst führt der Werkzeugwechselarm 4 eine Drehung gegen den Uhrzeigersinn um nicht ganz 90° durch (Fig. 3b), um das Werkzeug 13 im Werkzeugmagazin 3 zu fassen. Die Werkzeugspindel 2 bearbeitet währenddessen noch das Werkstück 13. Anschließend zieht der Werkzeugwechselarm 4 im Rahmen einer Bewegung (von oben betrachtet mit vertikaler und/oder horizontaler Bewegungskomponente) entlang einer Bewegungsführung mit vorbestimmter Bewegungsbahn das Werkzeug aus dem Werkzeugmagazin heraus (Fig. 3c) und fährt mit dem Werkstück 13 wieder zurück in die Grund- bzw. Parkstellung (Figur 3d), während die Spindel immer noch dem Anwendungsprozess folgt.

Nun dreht sich der Werkzeugwechselarm um nicht ganz 90° im Uhrzeigersinn in die Richtung der Werkzeugwechselposition auf die Werkzeugspindel 2 zu, während sich die Werkzeugspindel 2 ebenfalls in Richtung der Werkzeugwechselposition bewegt, wobei der Anwendungsprozess nun unterbrochen ist. Erfindungswesentlich ist hier, dass diese beiden Bewegungen zeitgleich und aufeinander abgestimmt erfolgen. Während die Werkzeugspindel 2 die Wechselposition einnimmt, dreht der Werkzeugwechselarm 4 nur bis kurz vor die Werkzeugwechselposition (Fig. 3e). Anschließend greift der Werkzeugwechselarm 4 (Fig. 3f) das Werkzeug 13 an der Werkzeugspindel 2 (Eindrehvorgang) und zieht es, wie oben schon erläutert, ebenfalls mittels einer linearen Bewegung von der Werkzeugspindel 2 ab (Fig. 3f). Jetzt dreht sich der Werkzeugwechselarm auf die Position des einzuwechselnden Werkzeuges 13 um wenige Grade im Uhrzeigersinn weiter (Fig. 3g), um die Position des einzuwechselnden Werkzeuges 13 (Fig. 3h) einzunehmen und fährt das neue Werkzeug 13 in die Werkzeugspindel 2 (Fig. 3i) ein. Um die Werkzeugspindel 2 freizugeben und die Wechselposition zu verlassen (Ausdrehvorgang) dreht der Werkzeugwechselarm 4 einige Winkelgrade im Uhrzeigersinn weiter (Fig. 3j). Anschließend kehrt die Werkzeugspindel 2 in den Arbeitsraum zurück, während der Werkzeugwechselarm 4 sich zum Werkzeugmagazin 3 im Uhrzeigersinn weiter dreht (Fig. 3k). Dort wird das ausgewechselte Werkzeug 13 abgelegt (Fig. 31) und der Werkzeugwechselarm 4 nimmt seine Grundstellung (Fig. 3m) wieder ein.
Der Unterscheid zum Stand der Technik ist bei dieser Ausgestaltungsform der Erfindung zum einen ein völlig neu erarbeiteter Werkzeugwechselarm 4 sowie ein neuer Verfahrensablauf.
Der hier gezeigte Werkzeugwechselarm 4 zeichnet sich durch eine sehr kompakte Ausführung aus.

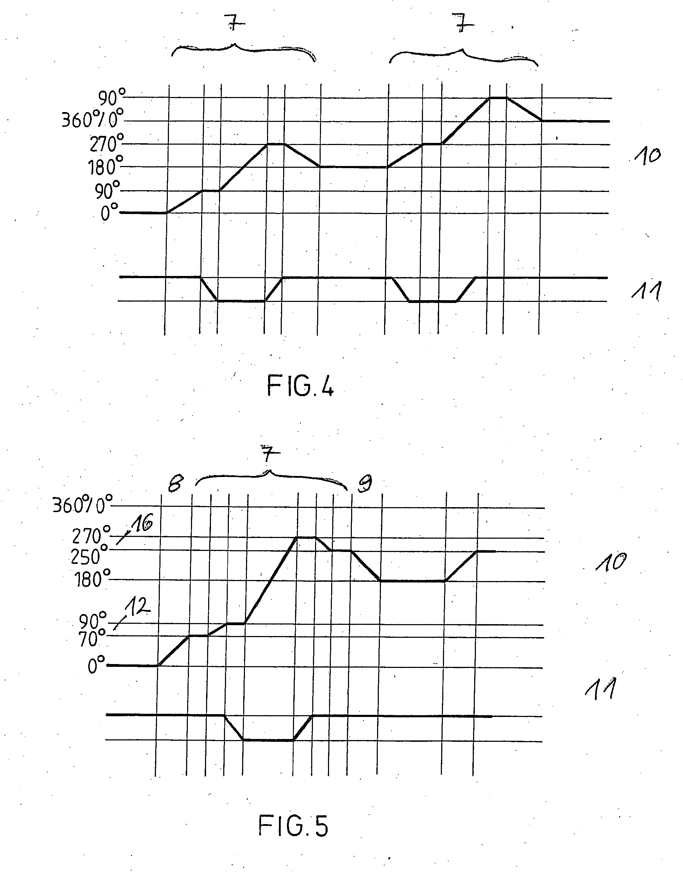

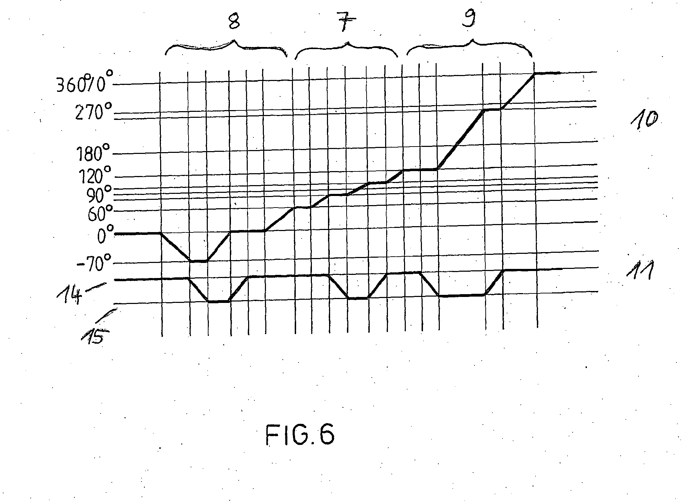

Bei Vergleich der Bewegungsabläufe im Zeitdiagramm gemäß der Figuren 4 bis 6 werden die erfindungsgemäßen Vorteile nochmals deutlich. Der obere Teil des Diagramms zeigt die vom Werkzeugwechselarm ausgeführten Drehwinkel über die Zeit abgetragen. Der untere Teil des Diagramms zeigt die Linearbewegung (Eingefahren 14 / Ausgefahren 15) über die Zeit abgetragen. Die in Figur 4 gezeigte Zeitspanne für einen Werkzeugwechsel (Stand der Technik) ist größer als bei der erfindungsgemäßen Lösung, da durch die Erfindung pro Zeiteinheit mehr Winkeleinheiten durchfahren werden (Figur 5). Der Grund hierfür ist, dass wegen der parallelen Arbeitsläufe während der Vorbereitungs- und Nachbereitungsphase der Wechselvorgang schneller abgeschlossen werden kann. Die Wechselzeit verkürzt sich in der Praxis um bis zu 50 % von beispielsweise 1 Sekunde auf 0,5 Sekunden. Aus Figur 6 ist ein vergleichbares Verhalten ablesbar. Mit der optimal genutzten Vorbereitungs- und Nachbereitungsphase in Verbindung mit dem erfindungsgemäßen neuen Wechselarmkonzept bewirkt man eine verkürzte Wechselzeit. Die Figuren 4 bis 6 zeigen, dass mit der erfindungsgemäßen Lösung wesentlich kürzere Wartezeiten zu erwarten sind, indem diese auf ein absolutes Minimum und soweit wie möglich reduziert werden.

### Bezugszeichenliste

| | |
|---|---|
| Werkzeugwechselsystem | 1 |
| Werkzeugspindel | 2 |
| Werkzeugvorratsträger | 3 |
| Werkzeugwechselarm | 4 |
| Drehachsenlagerung | 5 |
| W erkzeuggreifer | 6 |
| Werkzeugwechselphase | 7 |
| Vorbereitungsphase | 8 |
| Nachbereitungsphase | 9 |
| Drehbewegung | 10 |
| Linearbewegung | 11 |
| Eindrehzeit für Eindrehvorgang | 12 |
| Werkzeug | 13 |
| Eingefahren | 14 |
| Ausgefahren | 15 |
| Ausdrehzeit für Ausdrehvorgang | 16 |

## Patentansprüche

1. Werkzeugwechselsystem (1) mit Werkzeugspindel (2), Werkzeugvorratsträger (3) und länglich ausgebildetem Werkzeugwechselarm (4) mit Werkzeuggreifer (6), **dadurch gekennzeichnet, dass** der Werkzeugwechselarm (4) an einem Ende drehbar gelagert ist und das andere Ende zwei Werkzeuggreifer (6) umfasst.

2. Werkzeugwechselsystem nach Anspruch 1, **dadurch gekennzeichnet, dass** der Werkzeugwechselarm (4) eine Bewegungsführung umfasst, so dass er einer vorbestimmten Bewegungsbahn in einer zu seiner Drehachse (5) im wesentlichen senkrechten Ebene folgen kann.

3. Werkzeugwechselsystem nach einem der vorhergehenden Ansprüche, **dadurch gekennzeichnet, dass** der Werkzeugwechselarm (4) in Richtung seiner Drehachse (5) linear beweglich gelagert ist, so dass er eine Hub- oder Absenkbewegung ausführen kann.

4. Werkzeugwechselsystem nach einem der vorhergehenden Ansprüche, **dadurch gekennzeichnet, dass** der Werkzeugwechselarm (4) als drehbarer Balken ausgebildet ist, wobei die Drehachse (5) an dem dem Werkzeuggreifer (6) im wesentlichen gegenüberliegenden Ende des Werkzeugwechselarmes (4) angeordnet ist.

5. Werkzeugwechselsystem nach einem der vorhergehenden Ansprüche, **dadurch gekennzeichnet, dass** der Werkzeuggreifer (6) zwei je an einer Längsseite des Werkzeugwechselarmes (4) angeordnete und sich gegenüberliegende Ausnehmungen (6) umfasst.

6. Werkzeugwechselsystem nach einem der vorhergehenden Ansprüche, **dadurch gekennzeichnet, dass** der Werkzeugwechselarm (4) elektrisch direkt angetrieben ist.

7. Werkzeugwechselsystem nach einem der vorhergehenden Ansprüche, **dadurch gekennzeichnet, dass** dieses von einer Werkzeugmaschine umfasst ist.

8. Verfahren zum Wechseln von Werkzeugen an einer in einem Arbeitsraum angeordneten Werkzeugspindel (2) mittels eines Werkzeugwechselarmes (4) und eines Werkzeugmagazins (3) an einer Wechselposition, wobei der Werkzeugwechselarm (4) folgende Phasen durchläuft:
a) Verlassen einer Parkstellung,
b) Werkzeugwechsel vorbereiten,
c) Werkzeugwechsel durchführen,
d) Parkstellung erneut einnehmen,
und Bewegungsabläufe des Werkzeugwechselarmes (4) und der Werkzeugspindel (2) zeitparallel ablaufen, wobei sich die Werkzeugspindel (2) zur Vorbereitung des Werkzeugwechsels im wesentlichen gleichzeitig mit dem Werkzeugwechselarm (4) zur Wechselposition bewegt und sich die Werkzeugspindel (2) nach Durchführung des Werkzeugwechsels im wesentlichen zeitgleich in den Arbeitsraum bewegt, während der Werkzeugwechselarm (4) sich von der Wechselposition entfernt.

9. Verfahren nach Anspruch 8, wobei folgende Teilschritte umfasst sind:
a) Entnehmen des Werkzeuges aus dem Werkzeugmagazin (3) bzw. der Werkzeugspindel (2) mittels einer Bewegung des Wechselarmes (4) entlang einer vorgegebenen Bewegungsbahn.
b) Einsetzen des einzuwechselnden Werkzeuges an der Werkzeugspindel (2) bzw. Ablegen des ausgewechselten Werkzeuges im Werkzeugmagazin (3) mittels einer Bewegung des Werkzeugwechselarmes (4) entlang einer vorgegebenen Bewegungsbahn.

10. Verfahren nach einem der vorhergehenden Ansprüche 8 bis 9, **dadurch gekennzeichnet, dass** ein Werkzeugwechselsystem (1) nach einem der Ansprüche 1 bis 7 verwendet wird.

11. Verfahren nach Anspruch 10, **dadurch gekennzeichnet, dass** folgender Teilschritt mit umfasst ist:
Zwischen Entnahme des Werkzeuges aus dem Werkzeugmagazin (3) und Einsetzen des einzuwechselnden Werkzeuges an der Werkzeugspindel (2) vorübergehende Einnahme der Parkstellung.
